# EUROPÄISCHE PATENTSCHRIFT

(11) **EP 2 430 323 B1**
(45) Veröffentlichungstag und Bekanntmachung des Hinweises auf die Patenterteilung: **04.03.2015**
(21) Anmeldenummer: 10721474.4
(22) Anmeldetag: 17.05.2010
(51) Int. Cl.: F16C 19/16, F16C 33/38, F16C 33/78

(54) **WÄLZLAGER MIT KÄFIG ZUR VERHINDERUNG EINER ÜBERFLUTUNG MIT SCHMIERMITTEL**
ROLLING BEARING WITH CAGE FOR PREVENTING LUBRICANT OVERFLOW
PALIER À ROULEMENT AVEC CAGE POUR EMPÊCHER LE DEBORDEMENT DE LUBRIFIANT

(30) Priorität: 16.05.2009 DE 102009021640
(43) Veröffentlichungstag der Anmeldung: 21.03.2012
(73) Patentinhaber: Schaeffler Technologies AG & Co. KG, 91074 Herzogenaurach (DE)
(72) Erfinder: MITCHELL, Christopher, Carthew PI26 8XG (GB); SCHÄFER, Christian, 90453 Nürnberg (DE); SCHMIDT, Heiko, 96172 Mühlhausen (DE); SOLFRANK, Peter, 86158 Frensdorf (DE)
(86) Internationale Anmeldenummer: PCT/EP2010/056725
(87) Internationale Veröffentlichungsnummer: WO 2010/133542

(56) Entgegenhaltungen:
- WO-A2-2008/014768
- DE-A1- 2 329 911
- DE-A1- 3 307 845
- FR-A1- 2 308 013

## Beschreibung

### Gebiet der Erfindung

Die Erfindung betrifft ein Wälzlager, für einen Turbolader, mit einem Außenring mit einer ersten Wälzkörperlauffläche und einem Innenring mit einer zweiten Wälzkörperlauffläche sowie mehreren in Wälzkörpertaschen eines Wälzkörperkäfigs aufgenommenen Wälzkörpern, wobei der Wälzkörperkäfig eine Führungsfläche aufweist, die an einer auf einem kleineren Radius als dem Radius der ersten Wälzkörperlauffläche angeordneten Innenfläche des Außenrings geführt ist.

Ein gattungsbildendes Lager ist aus der DE 33 07 845 A1 bekannt.

### Hintergrund der Erfindung

Die DE 43 27 815 A1 offenbart ein Schrägkugellager für einen Turbolader mit einem Außenring und einem Innenring sowie einem zwischen diesen angeordneten Wälzkörperkäfig in Form eines Ringteils mit radial eingebrachten Wälzkörpertaschen, in denen kugelförmige Wälzkörper über den Umfang positioniert angeordnet sind und jeweils mit einer Wälzkörperlauffläche des Außen- und Innenrings in Wälzkontakt treten. Das offenbarte Schrägkugellager ist in axiale Richtung offen ausgebildet, das heißt, zwischen Außenring, Innenring und Wälzkörperkäfig sind radial Freiräume vorhanden. Dies hat bei Unterbringung des Lagers zwischen mit Schmiermittel zumindest teilweise befüllten Volumina den Nachteil, dass das Schrägkugellager bei einer Anströmung mit Schmiermittel geflutet wird und erhöhte Planschverluste auftreten. Durch teilweise oder vollständige Überflutung erhöht sich daher der Lagerwiderstand in unerwünschter Weise.

### Aufgabe der Erfindung

Der Erfindung liegt daher die Aufgabe zu Grunde, ein Wälzlager für Turbolader, zu konzipieren, das gegen Überflutung geschützt ist und daher verminderte Reibungswerte insbesondere bei Überflutung aufweist.

### Beschreibung der Erfindung

Erfindungsgemäß wird die Aufgabe bei einem Wälzlager, für einen Turbolader, mit den Merkmalen des Oberbegriffs des Anspruchs 1 dadurch gelöst, dass das Wälzlager mit einem Wälzkörperkäfig versehen ist, an dem an der der Führungsfläche gegenüberliegenden Seite eine über den Umfang des Wälzkörperkäfigs angeordnete ringförmig in radiale Richtung erstreckte Erweiterung angeordnet ist. Die Erweiterung bildet einen Ringspalt zum Innenring gegen eine Anströmung von Schmiermittel und verschließt zu zumindest 80% einen Ringspalt zwischen der Innenfläche des Außenrings und einer Flanke des Innenrings.

Auf diese Weise wird in besonders vorteilhafter Weise an der Anströmseite des Schmiermittels eine Barriere vorgesehen, die eine Überflutung des Wälzlagers wirksam verhindert, während die Abströmseite geöffnet bleiben kann. Eine derartige Barriere kann dabei ohne zusätzlichen Teileaufwand realisiert werden, so dass die vorgeschlagene Lösung bezüglich Kostenaufwand, Gewicht und Vermeidung zusätzlicher Reibung durch gegebenenfalls eingesetzte Dichtungsteile wie Dichtlippen vorteilhaft ist. Weiterhin ist lediglich eine annähernde Abdichtung vorgesehen, so dass über einen verbleibenden Ringspalt die Schmierung des Lagers gewährleistet ist und ein großer, zu einer Überflutung des Wälzlagers führender Schmiermittelschwall vermieden wird. Hierzu wird die radiale Erweiterung in einen Zwischenraum zwischen der Führungsfläche und einer ringförmigen Außenfläche des Innenrings eingebracht, wobei diese den Zwischenraum zumindest annähernd verschließt. Dabei wird der Zwischenraum zumindest zu 80%, vorzugsweise zu 90% verschlossen.

Zur Vermeidung von Planschverlusten von Freiräumen zwischen Außenring und Innenring bei axial zurückgesetztem Wälzkörperkäfig kann vorgesehen werden, die radiale Erweiterung bündig mit den Stirnseiten von Außenring und Innenring vorzusehen und den Wälzkörperkäfig axial so auszudehnen, dass eine gemeinsame Stirnfläche zwischen Innenring, dem mit der radialen Erweiterung versehenen Wälzkörperkäfig und Außenring in Richtung Anströmseite gebildet wird.

Alternativ kann zur Verbesserung der Schwerpunktverhältnisse des Wälzkörperkäfigs die radiale Erstreckung axial in Richtung der Wälzkörper zurückverlagert und damit axial beabstandet zu einer Stirnseite des Wälzlagers angeordnet werden. Beispielsweise kann sich die radiale Erstreckung direkt an den Außenumfang der Wälzkörpertaschen anschließen.

Der Innenumfang der radialen Erweiterung kann dabei bezüglich ihrer Neigung einer Gegenfläche des Innenrings anschließen, so dass über die axiale Erstreckung des Innenumfangs der radialen Erweiterung ein konstanter Ringspalt zu der Außenfläche wie Gegenfläche des Innenrings eingestellt wird. Entsprechend kann bei zu der gegenüber der Drehachse des Wälzlagers geneigter Gegenfläche des Innenrings auch der Innenumfang der radialen Erweiterung komplementär geneigt sein.

Das Wälzlager kann dabei so ausgelegt werden, dass ein minimaler axialer Abstand zwischen den Wälzkörpertaschen und einer Stirnseite des Wälzkörperkäfigs im Wesentlichen der maximalen radialen Breite des Wälzkörperkäfigs entspricht. Auf diese Weise werden günstige Belastungen erzielt. Beispielsweise kann ein Verhältnis zwischen einem minimalen axialen Abstand zwischen den Wälzkörpertaschen und einer Stirnseite des Wälzkörperkäfigs und der maximalen radialen Erstreckung des Wälzkörperkäfigs zwischen 0,5 und 2 ausgelegt werden.

### Kurze Beschreibung der Zeichnungen

Die Erfindung wird nachfolgend anhand der in den Figuren 1 bis 3 dargestellten Ausführungsbeispiele näher erläutert. Dabei zeigen:
- Figur 1: einen Teilschnitt durch ein erfindungsgemäßes Wälzlager,
- Figur 2: einen Teilschnitt durch ein gegenüber dem Wälzlager der Figur 1 abgeänderten Wälzlager, und
- Figur 3: einen Ausschnitt aus einem schematisch dargestellten Turbolader mit einer weiteren Ausführung eines gegenüber den Wälzlagern der Figuren 1 und 2 geänderten Wälzlagers.

### Ausführliche Beschreibung der Zeichnungen

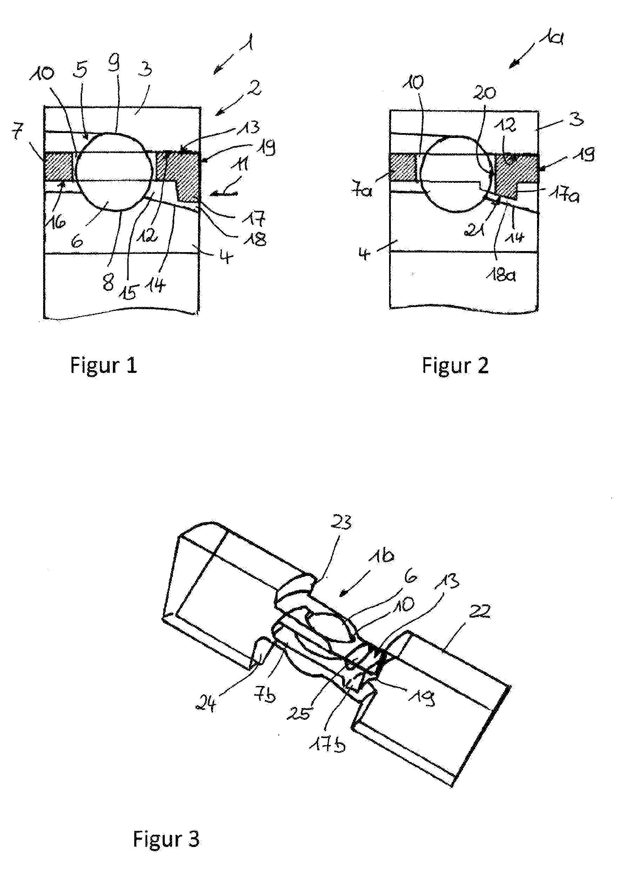

Figur 1 zeigt einen Teilschnitt eines um eine Drehachse angeordneten Wälzlagers 1, das als Schrägkugellager 2 mit dem Außenring 3 und dem Innenring 4 sowie dazwischen angeordneten Wälzkörpern 5 in Form von Kugeln 6 ausgebildet ist. Die Kugeln 6 sind auf Wälzkörperlaufbahnen 8, 9 geführt und in einem Wälzkörperkäfig 7 in entsprechenden, über den Umfang verteilten Wälzkörpertaschen 10 geführt und fixiert.

Zur Führung des ringförmigen Wälzkörperkäfigs 7 ist am Außenring 3 radial innerhalb der Wälzkörperlaufbahn 9 und der Anströmseite in Richtung des Pfeils 11 und Druckseite des Wälzlagers 1 eine ringförmige Innenfläche 12 vorgesehen, an dem eine Führungsfläche 13 des Wälzkörperkäfigs 7 radial geführt ist. Durch die Ausgestaltung des Innenrings 4 insbesondere mit einer gegenüber der Anströmseite abfallenden Flanke 14 bildet sich zwischen Außenring 3 und Innenring 4 ein im Wesentlichen nur von dem Wälzkörperkäfig 7 und den Kugeln 6 beeinträchtigter Ringspalt 15, der bei Anströmung von herkömmlichen Wälzlagern dieses Typs zu einer Überflutung des Wälzlagers 1 und damit bei hohen Differenzdrehzahlen zwischen Außenring 3 und Innenring 4 zu enormen Planschverlusten des Wälzlagers führt.

Um dies zu vermeiden, ist an dem Wälzkörperkäfig 7 an der der Führungsfläche 13 gegenüberliegenden Seite, also an dessen Innenfläche 16, eine radial nach innen gerichtete, über den Umfang des Wälzkörperkäfigs 7 ausgebildete Erweiterung 17 vorgesehen, die den Ringspalt 15 soweit verschließt, dass eine Durchflutung des Wälzlagers 1 mit Schmiermittel unterbleibt, eine Schmierung jedoch aufrechterhalten bleibt. Hierzu ist zwischen der Flanke 14 und der Erweiterung 17 ein gegenüber dem Ringspalt 15 verengter Ringspalt 18 vorgesehen, der maximal 20 % vorzugsweise eine Ringfläche kleiner 10 % der ursprünglichen durch den Ringspalt 15 freigegebenen Fläche freigibt. Die Rückseite des Lagers in Abströmrichtung bleibt unverändert gegenüber dem Abströmraum, aus dem keine Durchflutung droht, offen.

In dem gezeigten Ausführungsbeispiel schließt die radiale Erweiterung bündig mit der Stirnseite 19 des Wälzkörperkäfigs 7 ab. In vorteilhafter Weise fluchten dabei auch die Stirnseiten von Innenring 4 und Außenring 3 mit der Stirnseite 19, so dass Planschverluste weitgehend vermieden werden. Es versteht sich, dass für besondere Ausführungsbeispiele im Falle einer kompletten Schmierung des Wälzlagers 1 von der Abströmseite her die Erweiterung 17 an deren Innenumfang dichtlippenartig ausgeführt sein kann und mit der Flanke 14 in Dichtkontakt treten kann.

Figur 2 zeigt in Abänderung zu dem Wälzlager 1 der Figur 1 bei gleicher Darstellung und Ausführung ein Wälzlager 1a mit geändertem Wälzkörperkäfig 7a. In diesem Ausführungsbeispiel ist die radial nach innen gerichtete Erweiterung 17a axial beabstandet zu der Stirnseite 19 angeordnet und kann sich - wie gezeigt - direkt an die axialen Extrempositionen der Außenumfänge 20 der Wälzkörpertaschen 10 anschließen. Der Innenumfang 21 ist dabei der Steigung der Flanke 14 des Innenrings 4 angeglichen und in dem gezeigten Ausführungsbeispiel zur Bildung eines Ringspalts 18a mit gleichmäßig konischen Begrenzungsflächen mit einer der Flanke 14 entsprechenden Steigung versehen. Der Vorteil der auf diese Weise ausgeführten Erweiterung 17a sind die besseren Schwerpunktverhältnisse des Wälzkörperkäfigs 7a mit geringer Neigung zum Verkippen gegenüber der Innenfläche 12 des Innenrings 4.

Figur 3 zeigt einen Kreisausschnitt einer schematischen Darstellung einer Anwendung des gegenüber den Wälzlagern 1, 1a der Figuren 1 und 2 leicht abgeänderten Wälzlagers 1b. Dabei ist der Turbolader 22 lediglich systematisch als Volumenausschnitt ohne Darstellung der drehenden und gegeneinander drehenden Bauteile dargestellt. Im Weiteren ist von dem Wälzlager 1 lediglich der Wälzkörperkäfig 7b mit den Kugeln 6 dargestellt. Der in den gegeneinander verdrehbaren Aufnahmebereichen 23, 24 des Turboladers 22 aufgenommene Innenring und Außenring sind nicht dargestellt.

Der Wälzkörperkäfig 7b weist die radial nach innen gerichtete Erweiterung 17b entsprechend der Erweiterung 17 der Figur 1 direkt an der Stirnseite 19 des Wälzkörperkäfigs 7b auf. In der Führungsfläche 13 des Wälzkörperkäfigs 7b und den Wälzkörpertaschen 10 ist eine Ringnut 25 vorgesehen, die durch Aufnahme von Schmiermittel eine hydraulische Dämpfung in radiale Richtung gegenüber der Innenfläche 12 des Außenrings 3 (Figur 1) bewirken kann. Insbesondere kann diese Ringnut 25 auch eine Verringerung der Fläche der Führungsfläche 13 bewirken, so dass bei gleicher Reibung zwischen dieser und der Innenfläche 12 (Figur 1) die axiale Länge der Führungsfläche 13 verlängert und damit die Führung des Wälzkörperkäfigs 7b an dem Außenring verbessert werden kann.

### Bezugszeichenliste

- 1: Wälzlager
- 1a: Wälzlager
- 1b: Wälzlager
- 2: Schrägkugellager
- 3: Außenring
- 4: Innenring
- 5: Wälzkörper
- 6: Kugel
- 7: Wälzkörperkäfig
- 7a: Wälzkörperkäfig
- 7b: Wälzkörperkäfig
- 8: Wälzkörperlaufbahn
- 9: Wälzkörperlaufbahn
- 10: Wälzkörpertasche
- 11: Pfeil
- 12: Innenfläche
- 13: Führungsfläche
- 14: Flanke
- 15: Ringspalt
- 16: Innenfläche
- 17: Erweiterung
- 17a: Erweiterung
- 17b: Erweiterung
- 18: Ringspalt
- 18a: Ringspalt
- 19: Stirnseite
- 20: Außenumfang
- 21: Innenumfang
- 22: Turbolader
- 23: Aufnahmebereich
- 24: Aufnahmebereich
- 25: Ringnut

## Patentansprüche

1. Wälzlager (1, 1a, 1b) für einen Turbolader (22) mit einem Außenring (3) mit einer ersten Wälzkörperlaufbahn (9) und einem Innenring (4) mit einer zweiten Wälzkörperlaufbahn (8) sowie mehreren in Wälzkörpertaschen (10) eines Wälzkörperkäfigs (7, 7a, 7b) aufgenommenen Wälzkörpern (5), wobei der Wälzkörperkäfig (7, 7a, 7b) eine Führungsfläche (13) aufweist, die an einer auf einem kleineren Radius als dem Radius der ersten Wälzkörperlaufbahn (9) angeordneten Innenfläche (12) des Außenrings (3) geführt ist, wobei der Wälzkörperkäfig (7, 7a, 7b) an der der Führungsfläche (13) gegenüberliegenden Seite eine über den Umfang des Wälzkörperkäfigs (7, 7a, 7b) angeordnete, ringförmig in radiale Richtung erstreckte, einen Ringspalt zum Innenring (4) gegen eine Anströmung von Schmiermittel bildende Erweiterung (17, 17a, 17b) aufweist, **dadurch gekennzeichnet, dass**
die radiale Erweiterung (17, 17a, 17b) einen Ringspalt (15) zwischen der Innenfläche (12) des Außenrings (3) und einer Flanke (14) des Innenrings (4) zu zumindest 80% verschließt.

## Claims

1. Rolling-element bearing (1, 1a, 1b) for a turbocharger (22), comprising an outer ring (3) having a first rolling element raceway (9), an inner ring (4) having a second rolling element raceway (8), and multiple rolling elements (5) accommodated in rolling element pockets (10) of a rolling element cage (7, 7a, 7b), wherein the rolling element cage (7, 7a, 7b) comprises a guide surface (13), which is guided on an inner surface (12) of the outer ring (3) arranged on a smaller radius than the radius of the first rolling element raceway (9), wherein on the side opposite the guide surface (13) the rolling-element cage (7, 7a, 7b) comprises an extension (17, 17a, 17b), which is arranged over the circumference of the rolling element cage (7, 7a, 7b), extended annularly in the radial direction and forms an annular gap to the inner ring (4) against an incident flow of lubricant, **characterized in that** the radial extension (17, 17a, 17b) at least 80% closes an annular gap (15) between the inner surface (12) of the outer ring (3) and a flank (14) of the inner ring (4).

## Revendications

1. Palier à roulement (1, 1a, 1b) pour un turbocompresseur (22), comprenant une bague extérieure (3) dotée d'un premier chemin de roulement pour corps de roulement (9) et une bague intérieure (4) dotée d'un deuxième chemin de roulement pour corps de roulement (8) ainsi que plusieurs corps de roulement (5) reçus dans des cavités pour corps de roulement (10) d'une cage pour corps de roulement (7, 7a, 7b), la cage pour corps de roulement (7, 7a, 7b) comprenant une surface de guidage (13) qui est guidée sur une surface intérieure (12) de la bague extérieure (3) disposée sur un plus petit rayon que le rayon du premier chemin de roulement pour corps de roulement (9), la cage pour corps de roulement (7, 7a, 7b) comprenant, sur le côté opposé à la surface de guidage (13), un prolongement (17, 17a, 17b) disposé sur la périphérie de la cage pour corps de roulement (7, 7a, 7b), s'étendant sous forme annulaire dans la direction radiale et formant un interstice annulaire par rapport à la bague intérieure (4) en direction d'une arrivée d'écoulement de lubrifiant, **caractérisé en ce que** le prolongement radial (17, 17a, 17b) ferme à au moins 80 % un interstice annulaire (15) entre la surface intérieure (12) de la bague extérieure (3) et un flanc (14) de la bague intérieure (4).
